# EUROPEAN PATENT APPLICATION

(11) **EP 4 830 860 A1**
(43) Date of publication of application: **28.10.2026**
(21) Application number: 26166195.3
(22) Date of filing: 19.03.2026
(51) Int. Cl.: B23K 9/095, B23K 9/12, B23K 9/18

(54) **SUBMERGED ARC WELDING SYSTEM, AND SUBMERGED ARC WELDING METHOD**

(30) Priority: 25.04.2025 JP 2025073520
(71) Applicant: DAIHEN Corporation, Yodogawa-ku Osaka-shi Osaka 532-8512 (JP)
(72) Inventor: BABA, Hayato, Osaka-shi, 532-8512 (JP)
(74) Representative: Boult Wade Tennant LLP

(57) **Abstract**

A submerged arc welding system includes a welding power supply device that outputs an alternating output current corresponding to a set current value. The welding power supply device is configured to output, in place of the alternating output current, a modified current having a certain set frequency of less than 50 Hz. The set frequency is set in accordance with the set current value or the magnitude of the alternating output current.

## Description

### FIELD

The present disclosure relates to a submerged arc welding system for performing submerged arc welding, and to a submerged arc welding method.

### BACKGROUND

Submerged arc welding has been conventionally known. Submerged arc welding is performed by applying granular flux to a workpiece, feeding a welding wire into the flux, and generating an arc between the tip of the welding wire and the workpiece. Submerged arc welding enables efficient welding of thick plates by supplying a large current to a thick welding wire.

JP-A-2000-117442 discloses an example of a submerged arc welding device. The submerged arc welding device supplies flux stored in a hopper to a welding area via a nozzle (hose). The flux shields the area around the arc and stabilizes the arc. A part of the flux is melted by the arc heat and becomes molten slag. The molten slag covers the upper part of the molten metal and isolates it from the atmosphere, thereby protecting it from oxidation and the like.

In the vicinity of the arc generation area, gas mainly generated by melting of the flux is present between the molten metal and the molten slag. This space, namely a gas presence area under the molten slag, is called a cavity. The cavity is formed when the gas generated by melting of the flux is covered and trapped by the molten slag. When the internal pressure of the cavity increases, the molten slag cannot cover the entirety of the gas in the cavity. As a result, a hole is formed in a part of the molten slag, allowing the gas in the cavity to be discharged from the cavity to the outside, namely to the area above the molten slag. Although the existence of the cavity has been recognized in the academic field, the influence of the cavity on a welding result has not been clarified so far. However, experimental observations by the inventors have shown that the behavior of the cavity affects the behavior of the molten metal, thereby having an influence on the welding results such as bead appearance.

When the amount of gas generated by melting of the flux or the like is larger than the amount of gas discharged from the cavity, the cavity expands. On the other hand, when the amount of gas discharged is larger than the amount of gas generated, the cavity contracts. Excessive expansion and contraction of the cavity causes significant vibration of the molten metal, which results in poor bead appearance. Significant vibration of the molten metal leads to a change in the weld width of a base material, causing uneven bead widths and the occurrence of undercuts. This phenomenon can occur in any type of joint, but it is particularly pronounced in downhand or flat fillet welding, horizontal fillet welding, and welding within a groove. In addition, significant vibration of the molten metal causes ripples and waviness on the weld bead, which results in poor appearance. Further, when the cavity contracts excessively, both ends of the molten metal are pushed toward the center of the bead by the molten slag. This narrows the bead width. In some cases, the molten metal that vibrates significantly may entrain the gas and cause pore defects. In addition, when the molten slag vibrates significantly due to excessive expansion and contraction of the cavity, fine bubbles in the molten slag are discharged to the outside, resulting in an increase in the density of the molten slag. In this case, it is difficult to remove solidified slag (generally referred to simply as "slag"), which is formed after the molten slag is cooled and solidified. As described above, excessive expansion and contraction of the cavity causes various problems. For favorable welding performance, it is important to stabilize the cavity.

In order to suppress excessive expansion and contraction of the cavity, an amount of gas equal to the amount of gas generated may be periodically discharged from the cavity. The above can be achieved naturally without any special operation up to certain conditions involving current, heat input, welding speed, or weld cross-sectional area. Since stable welding can be achieved within this range of conditions, conventional submerged arc welding is applied within this range. However, when the current, heat input, welding speed, or weld cross-sectional area increases, the amount of gas discharged from the cavity cannot keep pace with the amount of gas generated. As a result, the cavity continues to expand to a large size. Ultimately, the molten slag can no longer confine the gas within the cavity, and a hole is formed in the molten slag. As a result, the gas inside the cavity is suddenly discharged to the outside, and the cavity rapidly contracts. When these behaviors are repeated and the cavity repeatedly undergoes excessive expansion and contraction, favorable welding results cannot be obtained.

### SUMMARY

In view of the circumstances described above, an object of the present disclosure is to provide a submerged arc welding system and a submerged arc welding method that can increase a range of welding conditions under which favorable welding results can be obtained.

According to a first aspect of the present disclosure, there is provided a submerged arc welding system that comprises: a welding power supply device that outputs an alternating output current corresponding to a set current value, where the welding power supply device is configured to output, in place of the alternating output current, a current having a set frequency of less than 50 Hz, with the set frequency being set in accordance with the set current value or a magnitude of the alternating output current.

In the above system, the set frequency may be set to at least 10 Hz and at most 25 Hz (i.e., not smaller than 10 Hz and not greater than 25 Hz) when the set current value or the magnitude of the alternating output current is 800 A or greater, while also being set to at least 20 Hz and at most 40 Hz when the set current value or the magnitude of the alternating output current is less than 800 A.

In the above system, the set frequency may vary in accordance with changes in at least one of a set voltage value, a magnitude of output voltage, a wire diameter of a welding wire used, a welding speed, a weld cross-sectional area, and a high current period ratio.

In the above instance, the set frequency may be set to a value F calculated based on following formulas (1) to (3) in which I represents one of the set current value and the magnitude of the output current, V represents one of the set voltage value and the magnitude of the output voltage, D represents the wire diameter, S represents the welding speed, A represents the weld cross-sectional area, R represents the high current period ratio, and K_{IA}, K_{VA}, K_{DA}, K_{SA}, K_{LA0}, K_{RB}, K_{IB}, K_{VB}, K_{DB}, K_{SB}, K_{AB}, K_{LB0}, and α each represent a predetermined coefficient or a constant: ${L}_{A} = {K}_{IA} ⋅ I + {K}_{VA} ⋅ V + {K}_{DA} ⋅ D + {K}_{SA} ⋅ S + {K}_{LA 0} ,$ (1) ${L}_{B} = {K}_{RB} ⋅ R + {K}_{IB} ⋅ I + {K}_{VB} ⋅ V + {K}_{DB} ⋅ D + {K}_{SB} ⋅ S + {K}_{AB} ⋅ A + {L}_{LB 0} ,$ (2) $F = MAX \left({L}_{A}, {L}_{B}\right) + α .$ (3)

In the respective systems above, the set frequency may be adjustable by operator manipulation.

According to a second aspect of the present disclosure, there is provided a submerged arc welding method for a submerged arc welding system including a welding power supply device that outputs an alternating output current corresponding to a set current value. The method may comprises: calculating a set frequency of less than 50 Hz in accordance with the set current value or a magnitude of the alternating output current; and causing the welding power supply device to output, in place of the alternating output current, a current having the set frequency.

According to a third aspect of the present disclosure, there is provided a submerged arc welding system that comprises: a welding power supply device that outputs an alternating output current corresponding to a set current value, where the set current value or a magnitude of the output current is at least 800 A, and the welding power supply device is configured to output, in place of the alternating output current, a current having a set frequency of at least 10 Hz and at most 25 Hz.

According to a fourth aspect of the present disclosure, there is provided a submerged arc welding system that comprises: a welding power supply device that outputs a direct output current corresponding to a set current value, where the welding power supply device is configured to output, in place of the direct output current, a current having a set frequency of less than 100 Hz, with the set frequency being set in accordance with the set current value or a magnitude of the direct output current.

In the above system, the set frequency may be adjustable by operator manipulation.

The welding power supply device according to the present disclosure varies a current by using a set frequency of less than 50 Hz and outputs the current, where the set frequency is set according to one of the set current value and a magnitude of the output current. The current is varied with a low frequency that is set according to the current and outputted, thereby facilitating the discharge of the gas from the cavity. This suppresses excessive expansion and contraction of the cavity. Accordingly, the submerged arc welding system according to the present disclosure can increase the range of welding conditions under which favorable welding results can be obtained.

### DRAWINGS

Fig. 1 is a diagram for describing a welding system according to a first embodiment, where Fig. 1(a) is a block diagram showing the overall configuration of the welding system, and Fig. 1(b) is a block diagram showing the internal configurations of a welding power supply device and a control device.
Fig. 2 is a waveform diagram showing an example of the output current of the welding power supply device.
Fig. 3 shows a set of tables presenting the calculation results of set frequencies and the evaluation results of bead appearance.
Fig. 4 is a block diagram for describing a welding system according to a second embodiment, and shows the internal configurations of a welding power supply device and a control device.
Fig. 5 is a diagram for describing a welding system according to a third embodiment, where Fig. 5(a) is a block diagram showing the internal configurations of a welding power supply device and a control device, and Fig. 5(b) is a waveform diagram showing an example of the output current of the welding power supply device.
Fig. 6 is a block diagram for describing a welding system according to a fourth embodiment, and shows the internal configurations of a welding power supply device and a control device.
Fig. 7 is a block diagram for describing a welding system according to a fifth embodiment, and shows the internal configurations of a welding power supply device and a control device.

### EMBODIMENTS

The following describes preferred embodiments of the present disclosure in detail with reference to the accompanying drawings.

### First Embodiment:

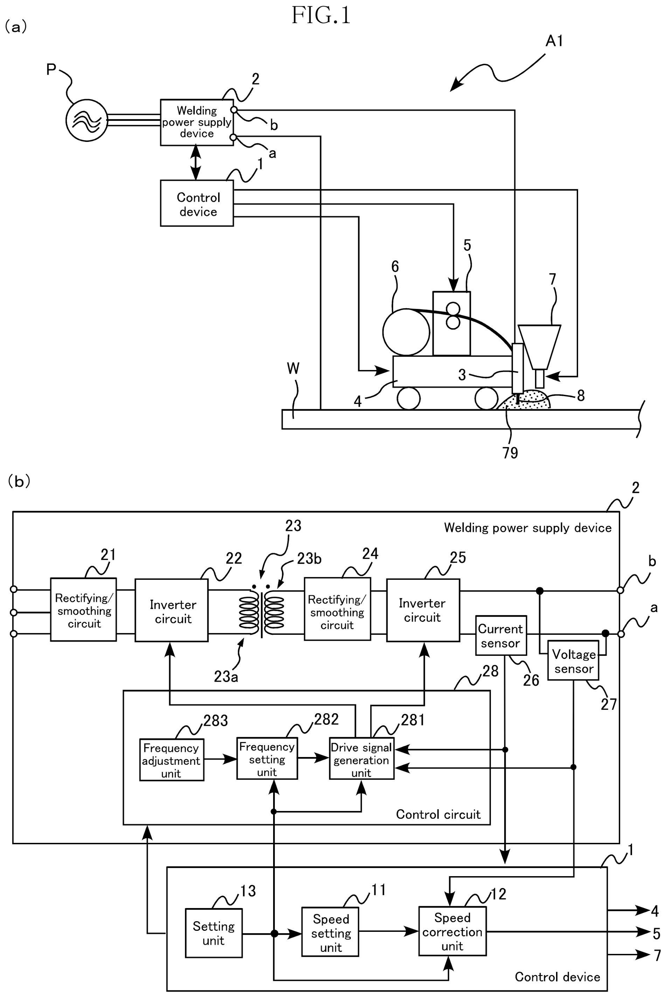

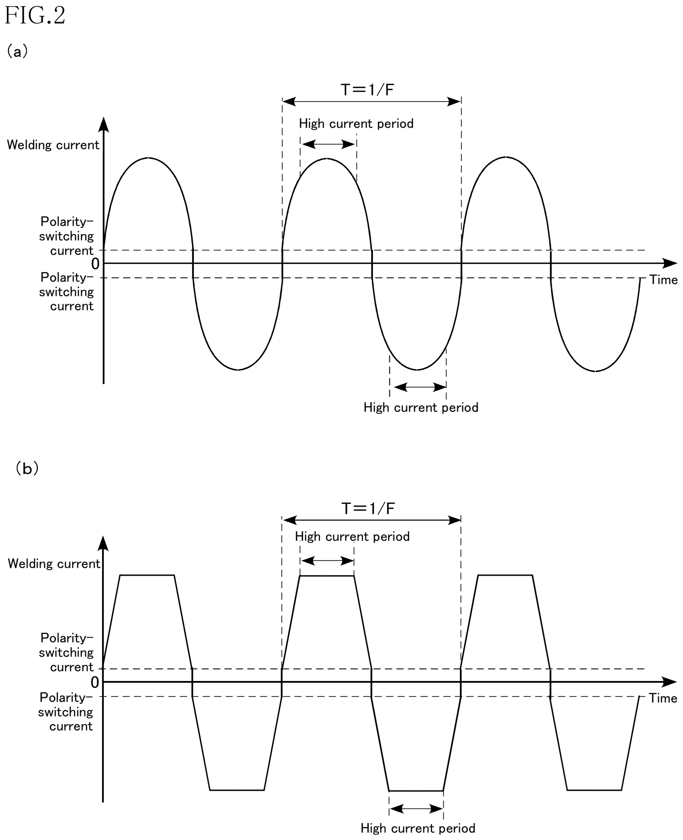

Figs. 1 and 2 are diagrams for describing a welding system A1 according to a first embodiment. Fig. 1(a) is a block diagram showing the overall configuration of the welding system A1. Fig. 1(b) is a block diagram showing the internal configurations of a welding power supply device 2 and a control device 1. Fig. 2 is a waveform diagram showing an example of the output current of the welding power supply device 2.

The welding system A1 is a system for performing submerged arc welding. As shown in Fig. 1(a), the welding system A1 includes a control device 1, a welding power supply device 2, a welding torch 3, a carriage 4, a wire feeder 5, a wire reel 6, a flux application device 7, and an electrode 8. The welding system A1 moves the carriage 4 along a welding line of a workpiece W while applying granular flux 79 by using the flux application device 7 and feeding a welding wire into the flux 79 by using the wire feeder 5. The welding wire is supplied from the wire reel 6. The welding power supply device 2 converts the AC power supplied from a commercial power supply P into power suitable for welding, and outputs the power thus converted. As a result, an arc is generated within the flux 79 between the electrode 8, which is the tip of the welding wire, and the workpiece W. Welding is performed by the heat of the arc. As a result, welding is performed along the welding line of the workpiece W. The workpiece W may be moved, e.g., translated or turned, instead of using the carriage 4.

The welding torch 3 guides the welding wire fed by the wire feeder 5 to a welding location. The tip of the welding wire forms the electrode 8, which protrudes from the tip of the welding torch 3. The welding torch 3 includes a contact tip (not illustrated), which is located at its tip and electrically connected to the welding power supply device 2. The welding power supply device 2 supplies welding current to the welding wire that is in contact with the contact tip. The welding torch 3 is fixed to the carriage 4, and moves along with the movement of the carriage 4. The welding torch 3 may be fixed directly to the carriage 4 or indirectly to the carriage 4 via an arm or the like.

The control device 1 performs various controls for the welding system A1. The control device 1 may be a general-purpose computer installed with a program that performs various controls for the welding system A1, or may be a dedicated device for the control of the welding system A1. The control device 1 causes the carriage 4 to move at a predetermined travel speed. The travel speed is set based on the material and thickness of the workpiece W, for example. The control device 1 instructs the flux application device 7 to start and end application of the flux 79. The start and end of application of the flux 79 by the flux application device 7 may be performed manually. The control device 1 instructs the welding power supply device 2 to output power.

The control device 1 instructs the wire feeder 5 to start and end feeding of the welding wire and to set the feed speed of the welding wire. In the present embodiment, the control device 1 performs variable-speed wire feed control by adjusting the feed speed of the welding wire to feedback-control the output voltage of the welding power supply device 2.

As shown in Fig. 1(b), the control device 1 includes a speed setting unit 11, a speed correction unit 12, and a setting unit 13. Although the control device 1 includes other elements for various controls, illustrations and descriptions thereof are omitted. The setting unit 13 sets information such as welding conditions according to an operation performed by a human operator on an operation unit (not illustrated) in the control device. Information such as welding conditions set by the setting unit 13 is used for various controls in the control device 1. In addition, part of information such as welding conditions set by the setting unit 13 is outputted to the welding power supply device 2 and used for various controls in the welding power supply device 2. Note that a part or the entirety of the setting unit 13 may be arranged in the welding power supply device 2.

The speed setting unit 11 and the speed correction unit 12 are configured to perform variable-speed wire feed control.

The speed setting unit 11 is configured to set reference speeds, which are standard wire feed speeds corresponding to welding conditions. The speed setting unit 11 stores reference speeds corresponding to set voltage values, and outputs, to the speed correction unit 12, a reference speed corresponding to a set voltage value inputted from the setting unit 13. The reference speeds are not particularly limited, but may be 10 m/min or less, for example.

The speed correction unit 12 is configured to calculate a set speed by applying a correction to the reference speed inputted from the speed setting unit 11 and set the set speed on the wire feeder 5. The correction of the reference speed may be performed in the following manner. The speed correction unit 12 calculates a voltage effective value (RMS value) of the voltage outputted from the welding power supply device 2. Specifically, the voltage sensor 27 (described below) detects the output voltage of the welding power supply device 2 and outputs a voltage detection signal corresponding to the detected output voltage. The speed correction unit 12 receives the voltage detection signal and calculates the voltage effective value based on the received signal. Then, the speed correction unit 12 calculates the deviation between the voltage effective value and the set voltage value (or the deviation of the voltage effective value from the set voltage value), and performs a predetermined operation (by using integral control, for example) on the calculated deviation, to calculate an operation value (deviation operation value). Finally, the speed correction unit 12 calculates a set speed by adding the deviation operation value to the reference speed inputted from the speed setting unit 11. It should be noted that when the voltage effective value is smaller than the set voltage value (inputted by the human operator), the deviation is a negative value, and thus the above operation value is negative. Accordingly, the set speed to be set on the wire feeder 5 is smaller (slower) than the reference speed, causing the feed speed of the welding wire to decrease. Thus, the arc length increases, and the welding voltage also increases. On the other hand, when the voltage effective value is larger than the set voltage value, the speed correction unit 12 adds a positive operation value (corresponding to the positive deviation) to the reference speed, and sets a set speed larger (faster) than the reference speed on the wire feeder 5. This causes an increase in the feed speed of the welding wire, a decrease in the arc length, and a decrease in the welding voltage. According to the present disclosure, the set speed may be 10 m/min or less, for example.

As described above, the control device 1 controls the output voltage (the voltage effective value) of the welding power supply device 2 to the set voltage value by adjusting the feed speed of the welding wire. Note that the internal configuration of the control device 1 is not limited to what has been described above. It suffices for the control device 1 to control the output voltage (the voltage effective value) of the welding power supply device 2 to the set voltage value by adjusting the feed speed of the welding wire.

The welding power supply device 2 converts the AC power supplied from the commercial power supply P into desired power, and outputs the converted desired power. As shown in Fig. 1(b), the welding power supply device 2 includes a rectifying/smoothing circuit 21, an inverter circuit 22, a transformer 23, a rectifying/smoothing circuit 24, an inverter circuit 25, a current sensor 26, a voltage sensor 27, and a control circuit 28.

The rectifying/smoothing circuit 21 converts the AC power inputted from the commercial power supply P into DC power, and outputs the DC power. The inverter circuit 22 converts the DC power inputted from the rectifying/smoothing circuit 21 into high-frequency power by switching its switching elements in accordance with an output control drive signal inputted from the control circuit 28, and outputs the high-frequency power. The transformer 23 transforms the voltage of the high-frequency power outputted from the inverter circuit 22, and outputs the high-frequency power to the rectifying/smoothing circuit 24.

The rectifying/smoothing circuit 24 converts the high-frequency power inputted from the transformer 23 into DC power, and outputs the DC power. The inverter circuit 25 converts the DC power inputted from the rectifying/smoothing circuit 24 into AC power by switching the polarity between an electrode positive polarity and an electrode negative polarity according to a polarity-switching drive signal inputted from the control circuit 28, and outputs the AC power.

The current sensor 26 detects the output current of the welding power supply device 2. In the present embodiment, the current sensor 26 is disposed on the connection line connecting one of the output terminals of the inverter circuit 25 and an output terminal a. The output current of the welding power supply device 2 detected by the current sensor 26 is approximately equal to the current flowing through the electrode 8. The current sensor 26 outputs a current detection signal corresponding to the instantaneous value of a detected current to the control circuit 28 and the control device 1. Note that the position of the current sensor 26 is not limited. The voltage sensor 27 detects the output voltage of the welding power supply device 2. In the present embodiment, the voltage sensor 27 detects the voltage between the output terminal a and an output terminal b. The voltage is approximately equal to the voltage applied between the workpiece W and the tip of the electrode 8. The voltage sensor 27 outputs a voltage detection signal corresponding to the instantaneous value of a detected voltage to the control circuit 28 and the control device 1. Note that the voltage sensor 27 may detect the voltage between a lead wire attached to the welding torch 3 and a lead wire attached to the workpiece W.

The control circuit 28 is provided to control the welding power supply device 2, and may be implemented by a microcomputer, for example. The control circuit 28 receives the current detection signal from the current sensor 26, the voltage detection signal from the voltage sensor 27, and various command signals and various set values from the control device 1. Then, the control circuit 28 outputs the output control drive signal to the inverter circuit 22, and outputs the polarity-switching drive signal to the inverter circuit 25.

Upon receiving, from the control device 1, a command signal instructing the start of power output, the control circuit 28 starts outputting a drive signal to each of the inverter circuit 22 and the inverter circuit 25 to thereby start power output. Upon receiving, from the control device 1, a command signal instructing the stop of power output, the control circuit 28 stops outputting a drive signal to thereby stop power output. The control circuit 28 includes a drive signal generation unit 281, a frequency setting unit 282, and a frequency adjustment unit 283.

The frequency setting unit 282 is configured to set a set frequency F, which is the frequency of the alternating current outputted by the welding power supply device 2. The frequency setting unit 282 sets the set frequency F based on a set current value inputted from the control device 1 (the setting unit 13).

As described above, in the submerged arc welding, a cavity is formed between the molten metal and the molten slag covering the upper part of the molten metal. Excessive expansion and contraction of the cavity causes various problems. In the present embodiment, the waveform of the current outputted by the welding power supply device 2 is controlled to facilitate periodic gas discharge from the cavity, thereby suppressing excessive expansion and contraction of the cavity.

The amount of gas generated in the cavity has a positive correlation with heat input. Further, heat input has a positive correlation with output current. In the present embodiment, the welding power supply device 2 is configured to periodically increase and decrease the output current to adjust the amount of gas generated, thereby controlling expansion and contraction of the cavity. Specifically, if the output current is constant, the cavity may simply continue to expand to a certain large size. On the other hand, when a high current (higher than the constant current) is applied, the expansion rate of the cavity increases. As a result, before the cavity can expand to a large size without breaking, a hole is formed in the molten slag, allowing the gas to be discharged from the cavity. After the application of the high current, a low current (lower than the constant current) is applied to cause the cavity to contract. In this manner, while a desired effective current or average current is maintained, it is possible to facilitate periodic gas discharge from the cavity and suppress excessive expansion of the cavity by periodically increasing and decreasing the applied current. In the present embodiment, a method using an AC waveform is adopted for increasing and decreasing a current. With the AC waveform, the magnitude of the absolute value of the current can be considered as having a positive correlation with the magnitude of the volume of a cavity. In an AC waveform, a period in which the absolute values of the current become relatively small and another period (such as a peak period described below) in which the absolute values of the current become relatively large occur periodically for polarity switching. This can be utilized to stabilize the cavity.

However, if the period of current variation is too short, the gas cannot be sufficiently discharged from the cavity during each period, resulting in a poor cavity stabilization effect. At an AC frequency of 50 Hz or 60 Hz, which is the commercial AC frequency, it is difficult to sufficiently stabilize the cavity when the current increases. In the present embodiment, an AC frequency of less than 50 Hz is set to extend the duration of each of the high current period and the low current period, thereby facilitating discharge of the gas from the cavity. On the other hand, if the duration of each of the high current period and the low current period is too long, the amount of gas discharged from the cavity becomes excessive, causing problems such as a narrow bead width. When the high current period continues for a long time, the molten metal is subjected to a large arc force for a long time, resulting in ripples on the molten metal. In view of all the above, the AC frequency needs to be controlled appropriately according to the welding conditions. In submerged arc welding, the behaviors of the molten metal, the arc, the molten slag, and the cavity cannot be visually observed. Thus, it is extremely difficult to determine an appropriate AC frequency. Further, in order to adjust the AC frequency appropriately based on the effects of the AC frequency on a welding result, an appropriate amount of experimental data may need to be accumulated, and it is difficult for an operator to properly adjust the welding frequency only by his/her own judgment. In light of these issues, according to the present disclosure, desired data are obtained in advance by evaluating the bead appearance under various welding conditions. Further, based on thus obtained data, appropriate AC frequencies corresponding to the welding conditions are calculated in advance. By using such pre-calculated frequencies, the setting of appropriate frequencies is performed automatically in the welding system A1.

Specifically, the frequency setting unit 282 calculates the set frequency F, based on the following formulas (4) to (6), by using a set current value I, a set voltage value V, the wire diameter D of a welding wire used, welding speed S (the travel speed of the carriage 4), a weld cross-sectional area A, and a high current period ratio R that are inputted from the control device 1 (the setting unit 13). The weld cross-sectional area A is the area of the weld metal in a cross section perpendicular to the welding travel direction of the welding area, and is calculated by dividing the volume of the weld metal per unit time (= the cross-sectional area of the welding wire multiplied by the wire feed speed) by the welding speed S. Generally, in submerged arc welding, the wire feed speed cannot be obtained in advance because variable-speed wire feed control is performed. In this case, for the wire feed speed, use may be made of a measured wire feed speed obtained by performing welding in advance under the same conditions, or an estimated wire feed speed obtained by estimation based on the welding conditions. Alternatively, the wire feed speed may be sequentially measured actual feed speeds during the welding. In this case, the weld cross-sectional area A will change according to the change in the wire feed speed, and therefore the set frequency F may also change. The high current period ratio R is the ratio of the high current period(s), during which a high current(s) is conducted, to one cycle of the current waveform. The calculation of the high current period ratio R is performed based on the current waveform being set by the setting unit 13. When the current waveform is a trapezoidal wave, the high current period ratio R corresponds to the proportion of the periods of the constant high currents (positive and negative) in one cycle (see Fig. 2(b)). When the current waveform is different from a trapezoidal wave, it may be approximated with an appropriately similar trapezoidal wave, and the high current period ratio R of this trapezoidal wave may be applied as the high current period ratio R of the non-trapezoidal current waveform. For example, when the current waveform is a sinusoidal wave (see Fig. 2(a)) having two (i.e., positive and negative) high current periods corresponding to those of the approximating trapezoidal wave, the high current period ratio R for the sinusoidal wave is 0.4, for example. Further, with the sinusoidal waveform, the current values during the high current period (of the positive side, for example) may be greater than the effective value (RMS current). In an instance, the current values during the high current period may be greater than 0.8 (more precisely, about 0.81) multiplied by the maximum value of the sinusoidal current. In the formulas (4-6) below, K_{IA}, K_{VA}, K_{DA}, K_{SA}, K_{LA0}, K_{RB}, K_{IB}, K_{VB}, K_{DB}, K_{SB}, K_{AB}, K_{LB0}, and α are predetermined coefficients or constants. α is a non-negative value, which is zero or greater. ${L}_{A} = {K}_{IA} ⋅ I + {K}_{VA} ⋅ V + {K}_{DA} ⋅ D + {K}_{SA} ⋅ S + {K}_{LA 0}$ (4) ${L}_{B} = {K}_{RB} ⋅ R + {K}_{IB} ⋅ I + {K}_{VB} ⋅ V + {K}_{DB} ⋅ D + {K}_{SB} ⋅ S + {K}_{AB} ⋅ A + {L}_{LB 0}$ (5) $F = MAX \left({L}_{A}, {L}_{B}\right) + α$ (6)

The above formula (4) is for calculating a low frequency limit L_{A}. The low frequency limit L_{A} is the lower limit value of a frequency that can suppress deterioration of bead appearance. When the frequency of the output current of the welding power supply device 2 is smaller than the low frequency limit L_{A}, the high current period continues for a long time. As a result, the molten metal vibrates, causing the bead appearance to deteriorate. The above formula (5) is for calculating a low frequency limit L_{B}. The low frequency limit L_{B} is the lower limit value of a frequency that can suppress narrowing of the bead width. When the frequency of the output current of the welding power supply device 2 is smaller than the low frequency limit L_{B}, the amount of gas discharged from the cavity becomes excessive, causing the bead width to narrow.

The above formula (6) is for calculating the set frequency F. MAX() indicates a MAX function for outputting the maximum value among the values inputted in the parentheses (). A constant α is a shift amount for adjusting the set frequency F to an appropriate frequency. In the above formula (6), the set frequency F is calculated by adding the constant α to the larger one of the low frequency limit L_{A} and the low frequency limit L_{B} to apply a shift. It may be desirable for the set frequency F to be as high as possible within the range where the cavity is stabilized. This is because shortening the duration of a low current state mitigates a decrease in arc rigidity and suppresses arc interruption and magnetic blow. The appropriate set frequency F is calculated by adding the constant α to the lower limit value of a frequency that can suppress deterioration of the bead appearance and can also suppress narrowing of the bead width.

The constant α preferably has a value of at least 0 Hz and at most 25 Hz. When the constant α is less than 0 Hz, vibration of the molten metal occurs due to prolonged continuation of the high current period, and narrowing of the bead width occurs due to excessive discharge of the gas from the cavity. On the other hand, when the constant α is greater than 25 Hz, discharge of the gas from the cavity becomes insufficient, and stabilization of the cavity may often be impossible. As the current, the heat input, the weld speed, and the weld cross-sectional area increase, the range of appropriate frequencies that yield a favorable bead appearance becomes narrower. Under such conditions, when the range of the constant α is wide, an estimated appropriate frequency may fall outside the actual range of appropriate frequencies. Setting the constant α within the above range enables accurate estimation of the appropriate frequency even under the above conditions. The constant α preferably has a value of at least 0 Hz and at most 5 Hz. In the present embodiment, the constant α is set to the most appropriate value of 2.5 Hz. Note that the value of the constant α is not limited to the above range.

In the present embodiment, when the set frequency F calculated with the above formula (6) is less than 10 Hz, the set frequency F is set to 10 Hz. When the set frequency F is less than 10 Hz, the duration of the low current period becomes long, causing the rigidity of the arc to decrease and making magnetic blow more likely to occur. However, in the environment where the risk of occurrence of magnetic blow is low, stable welding is possible even when the set frequency F is around 5 Hz. Thus, the lower limit of the set frequency F may be set to a smaller value.

The coefficients K_{IA}, K_{VA}, K_{DA}, K_{SA}, K_{RB}, K_{IB}, K_{VB}, K_{DB}, K_{SB}, K_{AB}, and the constants K_{LA0}, K_{LB0} are calculated by performing multiple regression analysis by using the actual welding results under respective conditions. The coefficients and the constants were calculated based on the data when the workpiece W was a steel material, the welding wire was JIS Z 3351 YS-S6, the flux was JIS Z 3352 SFMS1, and the welding joint was a downhand fillet welding joint. For the materials and joint, the low frequency limits can be calculated with an accuracy of approximately ±3 Hz with the coefficients obtained by this calculation. When the materials or the joint is changed, it is possible to use the same coefficients or recalculate the coefficients depending on the new materials or the new joint.

The frequency adjustment unit 283 is configured to make fine adjustments to the set frequency F set by the frequency setting unit 282. The frequency adjustment unit 283 makes fine adjustments to the set frequency F according to an operation performed by an operator on the operation unit (not illustrated) of the welding power supply device 2. This allows the operator to check the welding results and make fine adjustments to the set frequency F.

The drive signal generation unit 281 is configured to generate the output control drive signal for the inverter circuit 22 and the polarity-switching drive signal for the inverter circuit 25. The drive signal generation unit 281 calculates a current effective value from the current detection signal inputted from the current sensor 26, and calculates a modulated amplitude by performing modulation control based on the error amplification value between the current effective value and the set current value I. As a result, the amplitude of the output current changes such that the current effective value equals the set current value I. The drive signal generation unit 281 sets a target waveform based on the calculated amplitude, the information on the output waveform inputted from the setting unit 13, and the set frequency F inputted from the frequency setting unit 282. For example, when the output waveform is set to a sinusoidal waveform, a half-cycle of the sinusoidal wave is set to the target waveform. The drive signal generation unit 281 generates the output control drive signal such that the absolute value of the current detection signal inputted from the current sensor 26 follows the target waveform, and outputs the output control drive signal to the inverter circuit 22. The drive signal generation unit 281 also generates the polarity-switching drive signal according to the switching between the positive polarity period and the negative polarity period that correspond to the set frequency F, and outputs the polarity-switching drive signal to the inverter circuit 25.

The inverter circuit 22 switches its switching elements according to the output control drive signal and the inverter circuit 25 switches the polarity by switching its switching elements according to the polarity-switching drive signal. Thus, the welding power supply device 2 outputs an AC current that varies in a set waveform according to the set current value I and the set frequency F.

It is desirable that the AC waveform be a trapezoidal wave or a sinusoidal wave. As used herein, the trapezoidal wave refers to a waveform, as shown in Fig. 2(b), where the current (the absolute value) rises linearly from a polarity switching current to a peak current (upslope), the peak current is maintained, and then the current (the absolute value) linearly decreases from the peak current to the polarity switching current (downslope). Thereafter, polarity switching is performed, and the sequence above is repeated in the opposite polarity. The polarity switching current is approximately 0 to 400 A, and may be 200 A in one example. As shown in Fig. 2(a), the sinusoidal waveform is a current waveform in which the current between polarity switching currents varies in a sinusoidal (half-cycle) shape. The sinusoidal waveform is similar to a waveform in which, within an AC half-cycle, the upslope time and downslope time are each set to 0.3 times the AC half-cycle, i.e., the high current period ratio R = 0.4. The AC waveform is more preferably a trapezoidal wave in the range of 0.4 ≤ R ≤ 0.6 or a sinusoidal wave. In a trapezoidal wave, when the high current period ratio R exceeds 0.6, the duration of a low current state is shortened, and the difference in current between a low current state and a high current state becomes small. As a result, the effect of discharging gas from the cavity becomes small, making it difficult to stabilize the cavity. On the other hand, when the high current period ratio R is less than 0.4, the peak current becomes high. This can cause the welding power supply to be unable to output the peak current, impose greater restrictions on the secondary-side environment that is capable of outputting the peak current, or reduce the upper limit of the set current value I that ensures an intended output current. For these reasons, a high current period ratio R of less than 0.4 is undesirable.

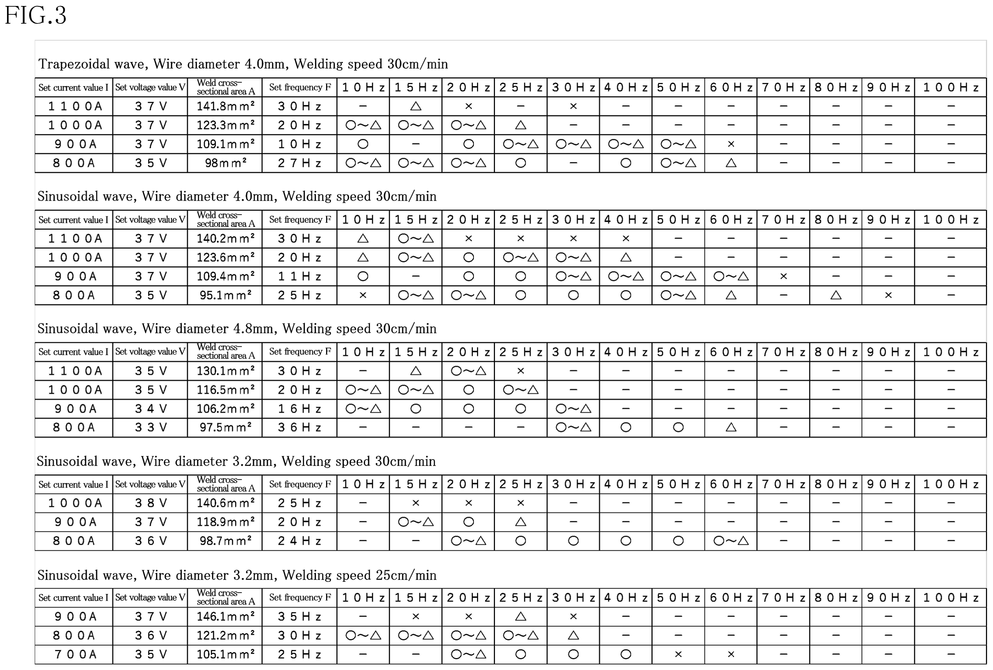

Fig. 3 shows a set of tables presenting the calculation results of set frequencies F and the evaluation results of bead appearance when α = 2.5. In the tables shown in Fig. 3, the results of actually performing welding under the corresponding conditions and evaluating the bead appearance are indicated by "o", "∘-△", "△", and "×". "∘" indicates conditions where the bead appearance is satisfactory. "∘-△" indicates conditions where there are no localized bead irregularities but the bead width gradually varies to result in unevenness. "△" indicates conditions where the bead width is uneven, and "×" indicates conditions where a welding defect such as an undercut has occurred. Note that "-" indicates conditions where no evaluation was performed because the result can be inferred from the preceding or succeeding evaluation results. Note that a high current period ratio R of "0.6" is set for a trapezoidal wave. Further, a high current period ratio R of "0.4" is set for a sinusoidal wave. As shown in Fig. 3, even when the set current value I is 800 A to 1000 A, the bead appearance is often improved with the use of the calculated set frequency F. In other words, using the set frequency F calculated with the above formulas (3) to (6) can increase the range of welding conditions under which favorable welding results can be obtained.

The following describes the operation and advantages of the welding system A1 according to the present embodiment.

According to the present embodiment, the frequency setting unit 282 calculates a set frequency F of less than 50 Hz, based on the set current value I inputted from the control device 1 (the setting unit 13). The welding power supply device 2 varies the current by using the set frequency F and outputs the current. At an AC frequency of 50 Hz or 60 Hz, which is the commercial AC frequency, it is difficult to sufficiently stabilize the cavity when the current increases. On the other hand, in the present embodiment, the current is varied with a set frequency F lower than the commercial AC frequency and outputted, thereby facilitating the discharge of the gas from the cavity. This suppresses excessive expansion and contraction of the cavity. Accordingly, the welding system A1 can increase the range of welding conditions under which favorable welding results can be obtained.

According to the present embodiment, the frequency setting unit 282 calculates the set frequency F, based on the above formulas (4) to (6), by using the set current value I, the set voltage value V, the wire diameter D of a welding wire used, the welding speed S, the weld cross-sectional area A, and the high current period ratio R that are inputted from the control device 1 (the setting unit 13). This allows the frequency setting unit 282 to set a more appropriate set frequency F, thus making it possible for the welding system A1 to further increase the range of welding conditions under which favorable welding results can be obtained. For example, under the condition of an AC frequency of 60 Hz, the maximum weld speed in the range of welding conditions under which favorable bead appearance can be obtained was approximately 207 g/min and the maximum weld cross-sectional area was approximately 87 mm². On the other hand, when the set frequency F calculated based on the above formulas (4) to (6) was used, the maximum weld speed was improved to at least 250 g/min (e.g., 282 g/min) and the maximum weld cross-sectional area to at least 110 mm² (e.g., 119 mm²).

According to the present embodiment, the frequency adjustment unit 283 makes fine adjustments to the set frequency F according to an operation performed by an operator on the operation unit of the welding power supply device 2. This allows the operator to check the welding results and make fine adjustments to the set frequency F.

In the present embodiment, the frequency setting unit 282 calculates the set frequency F by using the set current value I, the set voltage value V, the wire diameter D, the welding speed S, the weld cross-sectional area A, and the high current period ratio R. However, the present disclosure is not limited to this. The frequency setting unit 282 may calculate the set frequency F by additionally using a parameter other than the set current value I, the set voltage value V, the wire diameter D, the welding speed S, the weld cross-sectional area A, and the high current period ratio R. Alternatively, the frequency setting unit 282 may calculate the set frequency F by using the set current value I and either the set voltage value V, the wire diameter D, the welding speed S, the weld cross-sectional area A, or the high current period ratio R. In this case, the set frequency F can be calculated more easily. Further, the frequency setting unit 282 may set the set frequency F by using a simpler method. For example, the frequency setting unit 282 may set the set frequency F to at least 10 Hz and at most 25 Hz when the set current value I is 800 A or greater, and may set the set frequency F to at least 20 Hz and at most 40 Hz when the set current value I is less than 800 A. Even in this case, the cavity can be stabilized and the bead appearance can be improved in a wide range of conditions. This allows the set frequency F to be set more easily.

In the present embodiment, the frequency setting unit 282 uses the set current value I and the set voltage value V to calculate the set frequency F. However, the present disclosure is not limited to this. Instead of the set current value I, the frequency setting unit 282 may use the magnitude (an effective value or an average of absolute values) of the output current based on the current detection signal detected by the current sensor 26. Alternatively, instead of the set voltage value V, the frequency setting unit 282 may use the magnitude (an effective value or an average of absolute values) of the output voltage based on the voltage detection signal detected by the voltage sensor 27.

### Second Embodiment:

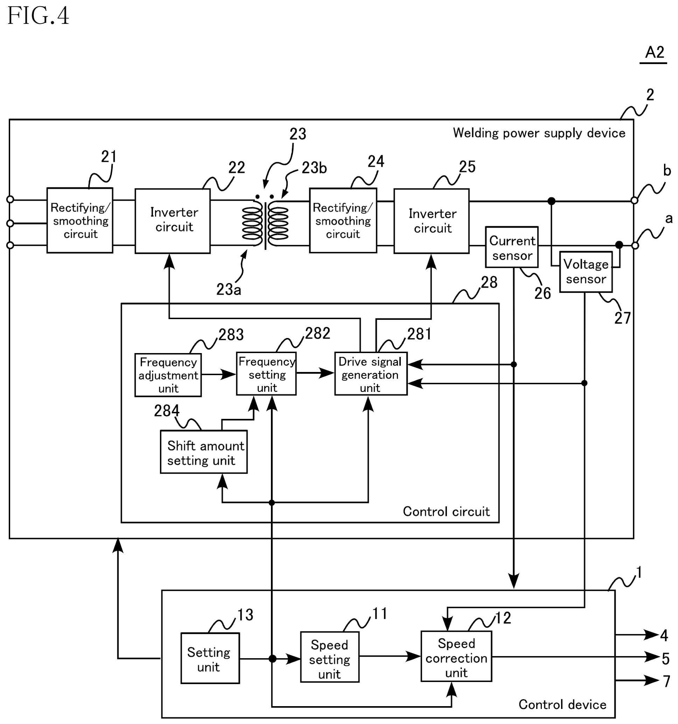

Fig. 4 is a diagram for describing a welding system A2 according to a second embodiment. Fig. 4 is a block diagram showing the internal configurations of a welding power supply device 2 and a control device 1 in the welding system A2. In Fig. 4, elements that are the same as or similar to those in the first embodiment are denoted by the same reference numerals. The welding system A2 according to the present embodiment is different from the welding system A1 according to the first embodiment in setting the constant α, which is a shift amount, according to the set current value I.

A control circuit 28 according to the present embodiment further includes a shift amount setting unit 284. The shift amount setting unit 284 sets the constant α based on the set current value I inputted from the control device 1 (a setting unit 13). The shift amount setting unit 284 sets the constant α to a value of at least 0 Hz and at most 25 Hz (e.g., 20 Hz) when the set current value I is less than 850 A, sets the constant α to a value of at least 0 Hz and at most 15 Hz (e.g., 10 Hz) when the set current value I is at least 850 A and less than 950 A, and sets the constant α to a value of at least 0 Hz and at most 5 Hz (e.g., 2.5 Hz) when the set current value I is at least 950 A.

In the present embodiment as well, a frequency setting unit 282 calculates a set frequency F of less than 50 Hz, based on the set current value I inputted from the control device 1 (the setting unit 13). The welding power supply device 2 varies the current by using the set frequency F and outputs the current. The current is varied with a set frequency F lower than the commercial AC frequency and outputted, thereby facilitating the discharge of the gas from the cavity and suppressing excessive expansion and contraction of the cavity. Accordingly, the welding system A2 can increase the range of welding conditions under which favorable welding results can be obtained. In addition, according to the present embodiment, the welding system A2 has advantages similar to those of the welding system A1 owing to its common configuration with the welding system A1. Furthermore, according to the present embodiment, the shift amount setting unit 284 sets the constant α based on the set current value I. This allows the welding system A2 to set a shift amount more appropriately over the entire current range, which makes it possible to set the set frequency F more accurately.

### Third Embodiment:

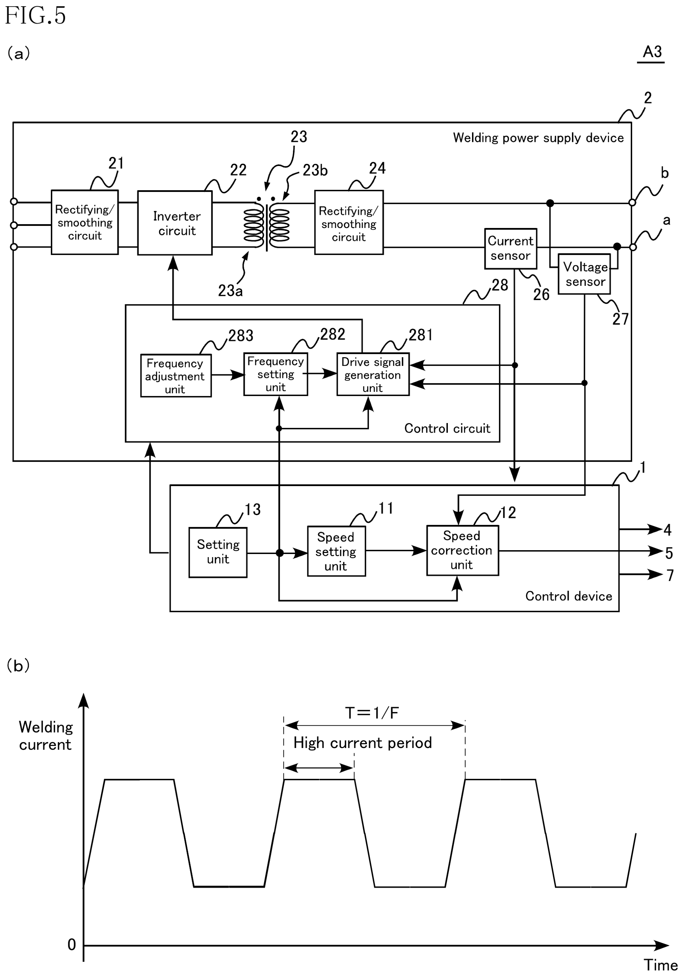

Fig. 5 is a diagram for describing a welding system A3 according to a third embodiment. Fig. 5(a) is a block diagram showing the internal configurations of a welding power supply device 2 and a control device 1 in the welding system A3. Fig. 5(b) is a waveform diagram showing an example of the output current of the welding power supply device 2. In Fig. 5, elements that are the same as or similar to those in the first embodiment are denoted by the same reference numerals. The welding system A3 according to the present embodiment is different from the welding system A1 according to the first embodiment in outputting DC power instead of AC power.

The welding power supply device 2 according to the present embodiment does not include an inverter circuit 25. A drive signal generation unit 281 does not generate a polarity-switching drive signal. The welding power supply device 2 outputs DC power instead of AC power. As shown in Fig. 5(b), the welding power supply device 2 outputs a DC current having a trapezoidal waveform in which the current varies at the set frequency F. Note that the waveform of the DC current outputted by the welding power supply device 2 is not limited to a trapezoidal waveform. It may be a rectangular waveform in which a high current and a low current are alternately switched or may be any other waveform as long as the current varies at the set frequency F.

A frequency setting unit 282 according to the present embodiment sets the set frequency F, which is the frequency of the DC current outputted by the welding power supply device 2, to twice the set frequency calculated using the above formulas (4) to (6). In other words, the frequency setting unit 282 sets a frequency of less than 100 Hz as the set frequency F. In the case of alternating current, the polarity switches between positive and negative within one cycle. Thus, two high current periods are included in one cycle. In order to vary DC current in the same manner as AC current, it is necessary to set the frequency of the DC current to twice the frequency of the AC current. Further, as a method for setting the set frequency F more easily, the frequency setting unit 282 may set the set frequency F to at least 20 Hz and at most 50 Hz when the set current value I is 800 A or greater, and may set the set frequency F to at least 40 Hz and at most 80 Hz when the set current value I is less than 800 A. The coefficients K_{IA}, K_{VA}, K_{DA}, K_{SA}, K_{RB}, K_{IB}, K_{VB}, K_{DB}, K_{SB}, K_{AB}, and the constants K_{LA0}, K_{LB0} may be calculated by outputting DC current under the respective conditions and performing multiple regression analysis by using the actual welding results. In this case, the set frequency F can be calculated directly by using the above formulas (4) to (6) based on these coefficients and constants.

According to the present embodiment, the frequency setting unit 282 calculates a set frequency F of less than 100 Hz, based on the set current value I inputted from the control device 1 (a setting unit 13). The welding power supply device 2 varies the current by using the set frequency F and outputs the current. The current is varied with the set frequency F, which is relatively low, and outputted, thereby facilitating the discharge of the gas from the cavity and suppressing excessive expansion and contraction of the cavity. Accordingly, the welding system A3 can increase the range of welding conditions under which favorable welding results can be obtained. In addition, according to the present embodiment, the welding system A3 has advantages similar to those of the welding system A1 owing to its common configuration with the welding system A1. Further, according to the present embodiment, the welding power supply device 2 does not need to include an inverter circuit 25. Thus, the welding system A3 allows the welding power supply device 2 to be made smaller and lighter, and can also suppress the manufacturing cost.

Note that in the welding system A1 according to the first embodiment, the drive signal generation unit 281 can generate a signal that fixes a predetermined switching element in the inverter circuit 25 to be in the ON state and fixes the other switching elements to be in the OFF state, rather than generating the polarity-switching drive signal. This makes it possible for the welding system A1 to output DC power. Thus, the welding power supply device 2 in the welding system A1 may be configured to output DC power.

### Fourth Embodiment:

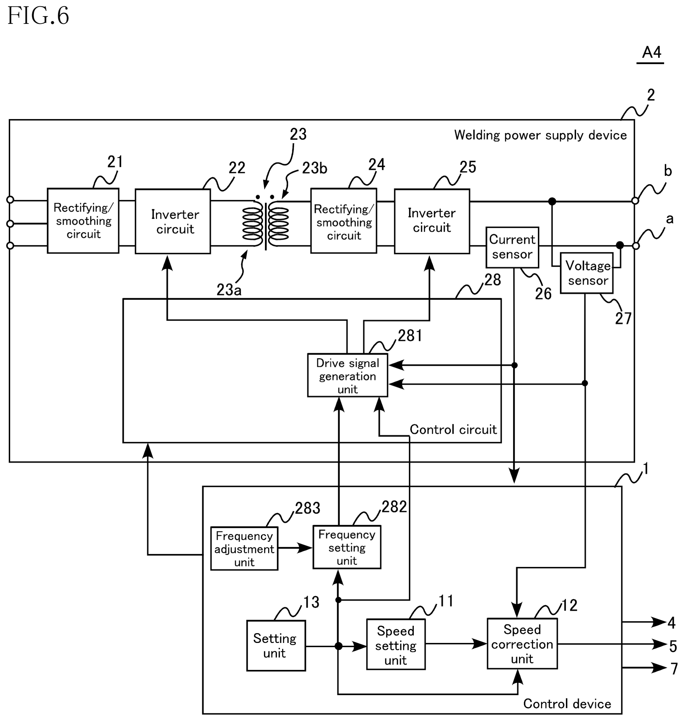

Fig. 6 is a diagram for describing a welding system A4 according to a fourth embodiment. Fig. 6 is a block diagram showing the internal configurations of a welding power supply device 2 and a control device 1 in the welding system A4. In Fig. 6, elements that are the same as or similar to those in the first embodiment are denoted by the same reference numerals. The welding system A4 according to the present embodiment is different from the welding system A1 according to the first embodiment in that a frequency setting unit 282 is arranged in the control device 1.

In the present embodiment, a control circuit 28 does not include a frequency setting unit 282 or a frequency adjustment unit 283, but the control device 1 includes the frequency setting unit 282 and the frequency adjustment unit 283. In other words, in the welding system A4, the set frequency F is calculated by the control device 1 and outputted to the control circuit 28 in the welding power supply device 2.

In the present embodiment as well, the frequency setting unit 282 calculates a set frequency F of less than 50 Hz, based on the set current value I inputted from a setting unit 13. The welding power supply device 2 varies the current by using the set frequency F and outputs the current. The current is varied with a set frequency F lower than the commercial AC frequency and outputted, thereby facilitating the discharge of the gas from the cavity and suppressing excessive expansion and contraction of the cavity. Accordingly, the welding system A4 can increase the range of welding conditions under which favorable welding results can be obtained. In addition, according to the present embodiment, the welding system A4 has advantages similar to those of the welding system A1 owing to its common configuration with the welding system A1.

### Fifth Embodiment:

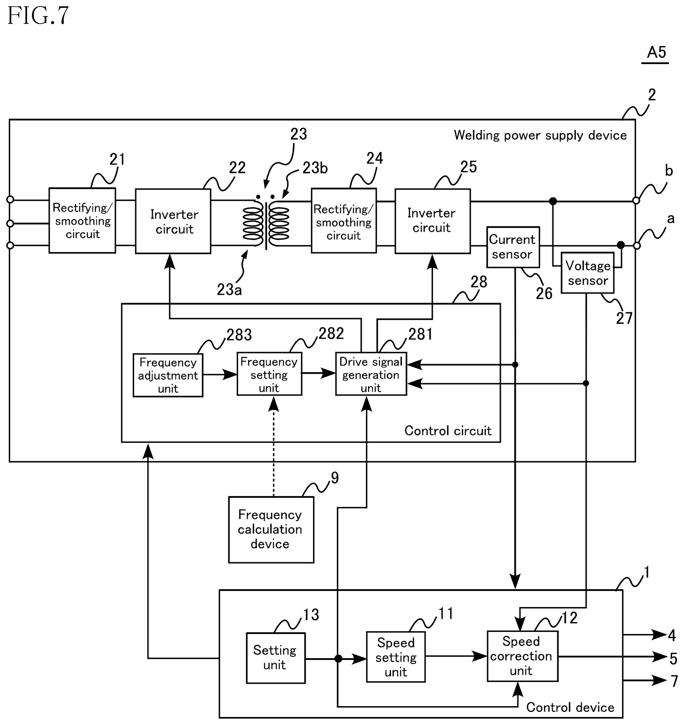

Fig. 7 is a diagram for describing a welding system A5 according to a fifth embodiment. Fig. 7 is a block diagram showing the internal configurations of a welding power supply device 2 and a control device 1 in the welding system A5. In Fig. 7, elements that are the same as or similar to those in the first embodiment are denoted by the same reference numerals. The welding system A5 according to the present embodiment is different from the welding system A1 according to the first embodiment in that it is provided with a frequency calculation device 9 separately from the welding power supply device 2 and the control device 1.

In the present embodiment, the welding system A5 further includes the frequency calculation device 9. The frequency calculation device 9 is a general-purpose computer, for example, on which software is installed for calculating the set frequency F in the same manner as the frequency setting unit 282 according to the first embodiment. The software may be spreadsheet software for calculating the set frequency F. An operator operates a non-illustrated operation unit in the frequency calculation device 9 to input the set current value I, the set voltage value V, the wire diameter D, the welding speed S, the weld cross-sectional area A, and the high current period ratio R. The frequency calculation device 9 calculates the set frequency F with use of the inputted information. The operator inputs the set frequency F calculated by the frequency calculation device 9 to a control circuit 28 in the welding power supply device 2. Note that each piece of information may be automatically acquired by the frequency calculation device 9 from the control device 1 (a setting unit 13). Further, the frequency calculation device 9 may output the calculated set frequency F automatically to the control circuit 28. The frequency setting unit 282 according to the present embodiment sets the set frequency F inputted by the operator or the frequency calculation device 9. In other words, in the welding system A5, the set frequency F is calculated by the frequency calculation device 9 and outputted to the control circuit 28 in the welding power supply device 2.

According to the present embodiment, the frequency calculation device 9 calculates a set frequency F of less than 50 Hz based on the set current value I. The welding power supply device 2 varies the current by using the set frequency F and outputs the current. The current is varied with a set frequency F lower than the commercial AC frequency and outputted, thereby facilitating the discharge of the gas from the cavity and suppressing excessive expansion and contraction of the cavity. Accordingly, the welding system A5 can increase the range of welding conditions under which favorable welding results can be obtained. In addition, according to the present embodiment, the welding system A5 has advantages similar to those of the welding system A1 owing to its common configuration with the welding system A1.

As can be understood from the fourth embodiment and the fifth embodiment, the configuration for calculating the set frequency F is not particularly limited. The set frequency F may be calculated at any location and by any method.

The submerged arc welding system and the submerged arc welding method according to the present disclosure are not limited to those in the above embodiments. Various design changes can be made to the specific configurations of the elements in the submerged arc welding system and the submerged arc welding method according to the present disclosure.

### REFERENCE NUMERALS

| | | |
|---|---|---|
| A1 to A5: | Welding system 2: | Welding power supply device |

## Claims

1. A submerged arc welding system comprising:
a welding power supply device that outputs an alternating output current corresponding to a set current value,
wherein the welding power supply device is configured to output, in place of the alternating output current, a current having a set frequency of less than 50 Hz, the set frequency being set in accordance with the set current value or a magnitude of the alternating output current.

2. The submerged arc welding system according to claim 1, wherein the set frequency is set to at least 10 Hz and at most 25 Hz when the set current value or the magnitude of the alternating output current is 800 A or greater, and is set to at least 20 Hz and at most 40 Hz when the set current value or the magnitude of the alternating output current is less than 800 A.

3. The submerged arc welding system according to claim 1, wherein the set frequency varies in accordance with changes in at least one of a set voltage value, a magnitude of output voltage, a wire diameter of a welding wire used, a welding speed, a weld cross-sectional area, and a high current period ratio.

4. The submerged arc welding system according to claim 3, wherein the set frequency is set to a value F calculated based on following formulas (1) to (3) in which I represents one of the set current value and the magnitude of the output current, V represents one of the set voltage value and the magnitude of the output voltage, D represents the wire diameter, S represents the welding speed, A represents the weld cross-sectional area, R represents the high current period ratio, and K_{IA}, K_{VA}, K_{DA}, K_{SA}, K_{LA0}, K_{RB}, K_{IB}, K_{VB}, K_{DB}, K_{SB}, K_{AB}, K_{LB0}, and α each represent a predetermined coefficient or a constant: ${L}_{A} = {K}_{IA} ⋅ I + {K}_{VA} ⋅ V + {K}_{DA} ⋅ D + {K}_{SA} ⋅ S + {K}_{LA 0} ,$ (1) ${L}_{B} = {K}_{RB} ⋅ R + {K}_{IB} ⋅ I + {K}_{VB} ⋅ V + {K}_{DB} ⋅ D + {K}_{SB} ⋅ S + {K}_{AB} ⋅ A + {L}_{LB 0} ,$ (2) $F = MAX \left({L}_{A}, {L}_{B}\right) + α .$ (3)

5. The submerged arc welding system according to any one of claims 1 to 4, wherein the set frequency is adjustable by operator manipulation.

6. A submerged arc welding method for a submerged arc welding system including a welding power supply device that outputs an alternating output current corresponding to a set current value, the method comprising:
calculating a set frequency of less than 50 Hz in accordance with the set current value or a magnitude of the alternating output current; and
causing the welding power supply device to output, in place of the alternating output current, a current having the set frequency.

7. A submerged arc welding system comprising:
a welding power supply device that outputs an alternating output current corresponding to a set current value,
wherein the set current value or a magnitude of the output current is at least 800 A, and
the welding power supply device is configured to output, in place of the alternating output current, a current having a set frequency of at least 10 Hz and at most 25 Hz.

8. A submerged arc welding system comprising:
a welding power supply device that outputs a direct output current corresponding to a set current value,
wherein the welding power supply device is configured to output, in place of the direct output current, a current having a set frequency of less than 100 Hz, the set frequency being set in accordance with the set current value or a magnitude of the direct output current.

9. The submerged arc welding system according to claim 7 or 8, wherein the set frequency is adjustable by operator manipulation.
